# DEMANDE DE BREVET EUROPEEN

(11) **EP 2 505 410 A1**
(43) Date de publication de la demande: **03.10.2012**
(21) Numéro de dépôt: 12162539.6
(22) Date de dépôt: 30.03.2012
(51) Int. Cl.: B60K 6/48, B60K 6/547, B60K 6/40, B60K 17/02, B60K 6/383, B60K 7/00

(54) **Groupe motopropulseur pour véhicule hybride**

(30) Priorité: 01.04.2011 EP 11160857
(71) Demandeur: Imperia Automobiles SA, 4031 Liege (BE)
(72) Inventeur: Toussaint, Yves, 4031 Liège (BE)
(74) Mandataire: De Groote, Christophe

(57) **Abrégé**

Groupe motopropulseur (10) pour véhicule hybride comprenant en séquence et dans l'ordre suivant : un moteur thermique (30), une première boîte de vitesse (70), un arbre intermédiaire (95), un embrayage (90), une machine électrique (50) apte à propulser le véhicule, et un arbre de sortie principal (105) apte à entraîner en rotation au moins une roue (110) du véhicule. La première boîte de vitesse (70) est une boîte de vitesse étagée et l'arbre moteur (40) du moteur thermique (30) est directement connecté au premier arbre d'entrée de boîte (75) de la boîte de vitesse (70), ce premier arbre d'entrée de boîte (75) comprenant une pluralité de pignons aptes à contribuer à la formation de la pluralité de rapports de réduction.

## Description

### Domaine technique

L'invention se rapporte à un groupe motopropulseur de type hybride parallèle. De manière plus précise, l'invention concerne, selon un premier aspect, un groupe motopropulseur pour propulser un véhicule et comprenant :
- un moteur thermique apte à propulser le véhicule et comprenant un arbre moteur,
- un arbre de sortie principal pour entraîner en rotation au moins une roue du véhicule,
- un arbre intermédiaire mécaniquement connecté en série entre l'arbre moteur et l'arbre de sortie principal,
- une première boîte de vitesse comprenant un premier arbre d'entrée de boîte et un premier arbre de sortie de boîte, présentant une pluralité de rapports de réduction entre le premier arbre d'entrée de boîte et le premier arbre de sortie de boîte et mécaniquement connectée en série entre l'arbre moteur et l'arbre intermédiaire,
- un embrayage comprenant une entrée d'embrayage et une sortie d'embrayage, mécaniquement connecté en série entre l'arbre intermédiaire et l'arbre de sortie principal pour accoupler/désaccoupler l'arbre moteur et l'arbre intermédiaire de l'arbre de sortie principal, ladite entrée d'embrayage étant connectée en permanence à l'arbre intermédiaire,
- au moins une machine électrique apte à propulser le véhicule et mécaniquement connectée entre la sortie d'embrayage et l'arbre de sortie principal.
Le rapport de réduction est défini comme le rapport entre la vitesse de rotation du premier arbre d'entrée de boîte et la vitesse de rotation du premier arbre de sortie de boîte.
Selon un autre aspect, l'invention se rapporte à un véhicule.

### Etat de la technique

Un exemple de tel groupe motopropulseur est notamment décrit dans les brevets DE 2732974 et US 6488108. Un moteur thermique est relié à l'arbre d'entrée d'une boîte de vitesse automatique. L'arbre de sortie de la boîte de vitesse automatique est quant à lui connecté au rotor d'une machine électrique par l'intermédiaire d'un dispositif d'accouplement débrayable ou embrayage. Quand ce dispositif d'accouplement est enclenché, le moteur thermique et le moteur électrique peuvent assurer la propulsion du véhicule simultanément. Le véhicule roule alors selon un mode hybride parallèle.

Les groupes motopropulseurs tels que ceux décrits dans DE 2732974 et US 6488108 fonctionnent. Cependant, on veut fournir un groupe motopropulseur plus efficace.

### Résumé de l'invention

Un des buts de la présente invention est de fournir un groupe motopropulseur hybride parallèle apte à propulser un véhicule et qui présente une plus grande efficacité énergétique par rapport aux systèmes connus. A cette fin, le groupe motopropulseur de l'invention est caractérisé en ce que la première boîte de vitesse est une boîte de vitesse étagée, en ce que l'arbre moteur du moteur thermique est directement connecté au premier arbre d'entrée de boîte de la première boîte de vitesse et en ce que ledit premier arbre d'entrée de boîte comprend une pluralité de pignons aptes à contribuer à la formation de ladite pluralité de rapports de réduction. Ainsi, la pluralité de pignons du premier arbre d'entrée de boîte participe à l'étagement des rapports de réduction de la première boîte de vitesse. Une boîte de vitesse étagée est une boite de vitesses présentant des rapports de réduction discrets.

De préférence, la première boîte de vitesse ne comprend pas d'embrayage de type roue libre, de type mono-disque ou multi-disque, ou de type électromagnétique. De préférence, l'entrée d'embrayage et la sortie d'embrayage sont coaxiaux. L'arbre de sortie principal est directement connectable à une jante d'une roue du véhicule pour entraîner ledit véhicule. L'embrayage qui est mécaniquement connecté en série entre l'arbre intermédiaire et l'arbre de sortie principal est capable à lui seul d'accoupler/désaccoupler l'arbre moteur et l'arbre intermédiaire de l'arbre de sortie principal.

Les groupes motopropulseurs décrits dans DE 2732974 et US 6488108 comprennent une boîte de vitesse automatique en aval du moteur thermique. L'accouplement du moteur thermique aux engrenages de la boîte de vitesse automatique n'est pas direct mais plutôt réalisé par l'intermédiaire d'un fluide (visco-coupleur). Il n'existe donc pas de connexion mécanique directe entre l'arbre moteur du moteur thermique et un arbre d'entrée de la boîte de vitesse comprenant des pignons dans les groupes motopropulseurs décrits dans DE 2732974 et US 6488108. Une boîte de vitesse automatique comprend en effet un embrayage typiquement du type visco-coupleur (hydraulique) qui assure un accouplement progressif entre l'arbre moteur du moteur thermique et les engrenages proprement dits de la boîte de vitesse. Un tel visco-coupleur est source de pertes. La première boîte de vitesse du groupe motopropulseur de l'invention ne comprend pas un tel embrayage. Dans le groupe motopropulseur de l'invention, le premier arbre d'entrée de boîte de la première boîte de vitesse comprend une pluralité de pignons aptes à contribuer à la formation de la pluralité de rapports de réduction de la première boîte de vitesse et ce premier arbre d'entrée de boîte est directement connecté à l'arbre moteur du moteur thermique. Le groupe motopropulseur de l'invention présente donc moins de pertes que les groupes motopropulseurs connus. Au final, l'efficacité énergétique du groupe motopropulseur de l'invention est plus grande par rapport à celle des groupes motopropulseurs connus. Il est à noter qu'il est possible d'assurer les fonctions « changement de rapports de réduction de la première boîte de vitesse » et « démarrage du véhicule » grâce à la présence de l'embrayage mécaniquement connecté en série entre l'arbre intermédiaire et l'arbre de sortie principal. Ainsi, par rapport à des configurations classiques connues de l'homme du métier, la séquence moteur thermique / embrayage / boîte de vitesse, est modifiée pour obtenir la séquence suivante selon l'invention : moteur thermique / boîte de vitesse / embrayage. L'absence d'embrayage entre le moteur thermique et la boîte de vitesse réduit l'encombrement et le poids de construction, la complexité de mise en oeuvre et le coût de fabrication du groupe motopropulseur. Par rapport à des groupes motopropulseurs connus utilisant la séquence classique moteur thermique / embrayage / boîte de vitesses, le groupe motopropulseur de l'invention présente un mode électrique pur plus efficace. En effet, lorsque l'embrayage est ouvert (mode électrique pur) les pertes pour l'entrainement des engrenages de la première boîte de vitesses (barbotage) sont supprimées. Un autre avantage du groupe motopropulseur de l'invention par rapport aux groupes motopropulseurs connus est qu'il présente un moindre coût de fabrication. En effet, le groupe motopropulseur de l'invention ne nécessite pas l'utilisation d'un visco-coupleur entre l'arbre moteur du moteur thermique et les pignons du premier arbre d'entrée de boîte aptes à contribuer à la formation de la pluralité de rapports de réduction. Cet aspect réduit le coût de fabrication du groupe motopropulseur.

De préférence, l'embrayage est un embrayage de type roue libre. Une telle variante permet de réduire le coût du groupe motopropulseur. Un embrayage de type roule libre permet en effet de solidariser (ou accoupler) son entrée d'embrayage et sa sortie d'embrayage sans pilotage d'un actuateur. Les inconvénients habituels de l'utilisation d'un embrayage de type roue libre (pas de frein moteur, pas de marcher arrière) sont sans importance pour le groupe motopropulseur de l'invention. En effet, le frein moteur et la marche arrière peuvent être assurés par l'au moins une machine électrique.

De préférence, au moins la moitié des rapports de réduction de la première boîte de vitesse possède une valeur inférieure ou égale à un. Ainsi, pour au moins la moitié des rapports de réduction de la première boîte de vitesse, la vitesse de rotation du premier arbre de sortie de boîte est supérieure à la vitesse de rotation du premier arbre d'entrée de boîte (la vitesse de rotation du premier arbre d'entrée de boîte est dictée par la vitesse de rotation de l'arbre moteur). Quand l'embrayage est enclenché (c'est-à-dire fermé), l'au moins une machine électrique est connectée au premier arbre de sortie de boîte par l'intermédiaire de cet embrayage. Il s'ensuit que la vitesse de rotation du rotor de cette machine électrique est supérieure à la vitesse de rotation de l'arbre moteur du moteur thermique pour au moins la moitié des rapports de réduction de la première boîte de vitesse. Cela permet d'utiliser une machine électrique plus légère pour une même puissance à délivrer. En effet, pour être plus légères, les machines électriques doivent tourner plus rapidement pour une même puissance délivrée. Vu la disposition et la spécificité de la première boîte de vitesse de l'invention, l'au moins une machine électrique tourne plus rapidement pour la plupart des rapports de réduction de la première boîte de vitesse. Il s'ensuit que le poids du véhicule dans lequel le groupe motopropulseur de l'invention est inséré est également réduit par rapport aux solutions connues. Au final, l'efficacité énergétique d'un tel véhicule est accrue. En termes économiques, les spécifications d'une machine électrique rapide correspondent mieux à l'offre principale du marché.

Dans un mode de réalisation préféré, le groupe motopropulseur comprend un différentiel mécaniquement connecté en série entre la sortie d'embrayage et l'arbre de sortie principal et l'au moins une machine électrique est mécaniquement connectée entre la sortie d'embrayage et le différentiel. Préférentiellement, l'au moins une machine électrique comporte un stator et un rotor et ce rotor est directement connecté à la sortie d'embrayage. Dans un autre mode de réalisation préféré, le groupe motopropulseur comprend un différentiel mécaniquement connecté en série entre la sortie d'embrayage et l'arbre de sortie principal et l'au moins une machine électrique est mécaniquement connectée entre le différentiel et l'arbre de sortie principal.

De préférence, le groupe motopropulseur de l'invention comprend une deuxième boîte de vitesse comprenant un deuxième arbre d'entrée de boîte et un deuxième arbre de sortie de boîte et présentant une pluralité de rapports de réduction entre ces deuxième arbre d'entrée et de sortie de boîte, la deuxième boîte de vitesse est mécaniquement connectée en série entre la sortie d'embrayage et le différentiel et l'au moins une machine électrique est mécaniquement connectée entre la sortie d'embrayage et la deuxième boîte de vitesse. Les différents rapports de réduction de la deuxième boîte de vitesse permettent de faire tourner le rotor de l'au moins une machine électrique à des vitesses de rotation différentes de celle de l'arbre de sortie principal. En particulier, il est possible de faire tourner le rotor de l'au moins une machine électrique à une vitesse de rotation qui est supérieure à la vitesse de rotation de l'arbre de sortie principal grâce à la deuxième boîte de vitesse. Ainsi, même à faible vitesse du véhicule, il est possible de faire tourner le rotor de l'au moins une machine électrique rapidement. La présence de la deuxième boîte de vitesse permet de scinder en deux parties la transmission à rapports variables. En particulier, la deuxième boîte de vitesse introduit des nouveaux rapports de réduction offrant plus de possibilités de faire tourner le rotor de l'au moins une machine électrique et l'arbre moteur du moteur thermique à des vitesses différentes permettant une meilleure efficacité énergétique de ces deux machines motrices. De manière préférée, au moins la moitié des rapports de réduction de la deuxième boîte de vitesse possède une valeur supérieure ou égale à un. Dans cette dernière variante de l'invention, pour au moins la moitié des rapports de réduction de la deuxième boîte de vitesse, la vitesse de rotation du rotor de l'au moins une machine électrique sera supérieure à la vitesse de rotation de l'arbre de sortie principal qui entraîne au moins une roue du véhicule.

Selon un autre aspect, l'invention se rapporte à un véhicule comprenant un groupe motopropulseur tel que décrit ci-dessus.

### Brève description des dessins

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre un groupe motopropulseur de l'invention selon un premier mode de réalisation;
- la Fig.2 illustre la connexion mécanique directe entre l'arbre moteur du moteur thermique et le premier arbre d'entrée de boîte de la première boîte de vitesse ainsi que les pignons portés par ce premier arbre d'entrée de boîte ;
- la Fig.3 montre un groupe motopropulseur de l'invention selon un mode préféré de réalisation;
- la Fig.4 montre le groupe motopropulseur de l'invention selon un autre mode préféré de réalisation.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

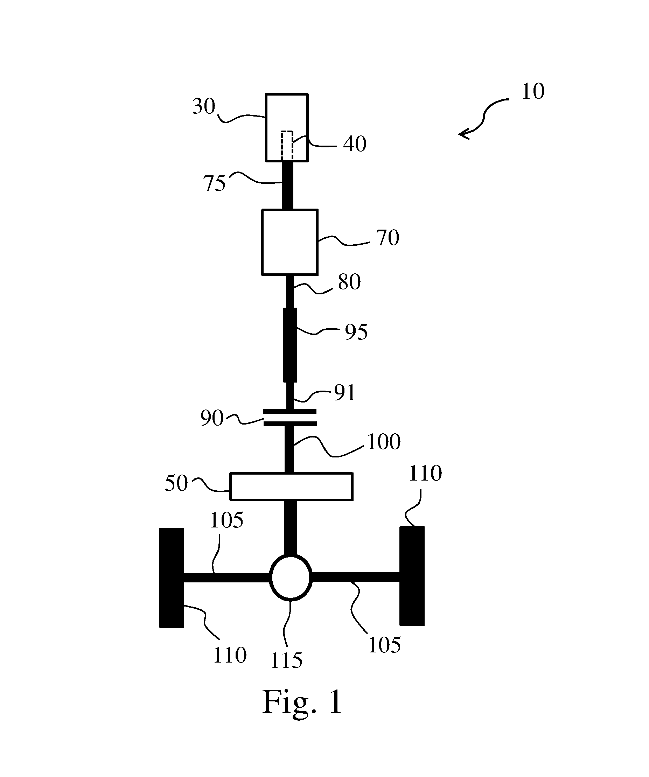

La figure 1 montre un groupe motopropulseur 10 selon un premier mode de réalisation de l'invention. Le groupe motopropulseur 10 comprend un moteur thermique 30 apte à propulser un véhicule 20 tel que par exemple une voiture. Le moteur thermique 30 comprend un arbre moteur 40 qui permet de transférer un couple de rotation. De manière préférée, le moteur thermique 30 est un moteur à combustion interne, par exemple du type moteur Diesel ou essence et l'arbre moteur 40 est dans ce cas l'arbre du vilebrequin du moteur 30. Le groupe motopropulseur 10 de l'invention comprend un arbre de sortie principal 105 apte à entraîner au moins une roue 110 du véhicule et un arbre intermédiaire 95 mécaniquement connecté en série entre l'arbre moteur 40 du moteur thermique et l'arbre de sortie principal 105. L'arbre de sortie principal 105 est directement connectable à une jante d'une roue 110 du véhicule pour entraîner ledit véhicule.

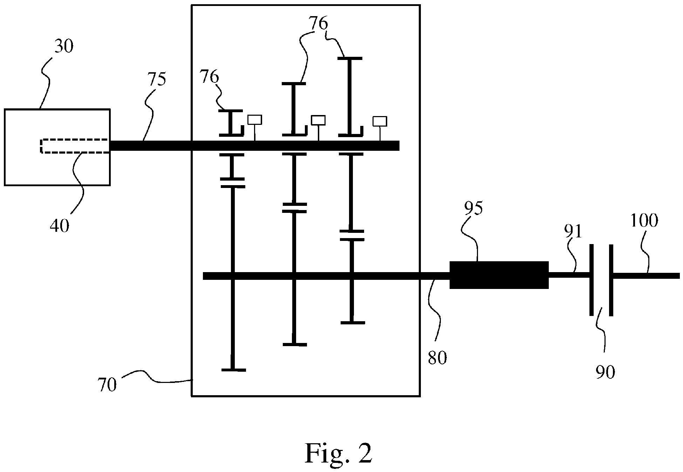

Le groupe motopropulseur 10 comprend également une première boîte de vitesse 70 comprenant un premier arbre d'entrée de boîte 75 et un premier arbre de sortie de boîte 80 et présentant une pluralité de rapports de réduction entre le premier arbre d'entrée de boîte 75 et le premier arbre de sortie de boîte 80. Dans une version préférée, le premier arbre de sortie de boîte 80 est l'arbre intermédiaire 95. La première boîte de vitesse 70 est mécaniquement connectée en série entre l'arbre moteur 40 du moteur thermique 30 et l'arbre intermédiaire 95. Le premier arbre d'entrée de boîte 75 de la première boîte de vitesse 70 comprend une pluralité de pignons 76 ou de roues dentées conçus pour participer à l'étagement des rapports de réduction de la première boîte de vitesse 70 : cela est illustré à la figure 2. Cette figure montre également que l'arbre moteur 40 du moteur thermique 30 est directement connecté à ce premier arbre d'entrée de boîte 75. Il n'y a donc pas d'embrayage entre l'arbre moteur 40 et le premier arbre d'entrée de boîte 75 de la première boîte de vitesse 70, ce premier arbre d'entrée de boîte 75 comprenant en outre une pluralité de pignons 76 aptes à contribuer à la formation de la pluralité de rapports de réduction de la première boîte de vitesse 70. Un rapport de réduction d'une boîte de vitesse telle que la première boîte de vitesse 70 est défini comme le rapport entre la vitesse de rotation du premier arbre d'entrée de boîte 75 et la vitesse de rotation du premier arbre de sortie de boîte 80. Un exemple de boîte de vitesse 70 pour l'invention est une boîte de vitesse manuelle étagée. De préférence, la première boîte de vitesse 70 ne comprend pas d'embrayage de type roue libre, de type mono-disque ou multi-disque, ou de type électromagnétique.

En aval de la première boîte de vitesse 70, le groupe motopropulseur 10 comprend un embrayage 90 qui est mécaniquement connecté en série entre l'arbre intermédiaire 95 et l'arbre de sortie principal 105. Cet embrayage 90 comprend une entrée d'embrayage 91 et une sortie d'embrayage 100. L'embrayage 90 n'est pas du type embrayage à contacts positifs. L'embrayage 90 utilisé dans le groupe motopropulseur 10 de l'invention est conçu pour accoupler la sortie d'embrayage 100 à l'entrée d'embrayage 91 même si la sortie d'embrayage 100 est en charge (c'est-à-dire lorsque l'arbre de sortie principal 105 est connecté aux roues d'un véhicule). Ainsi, contrairement aux crabots, l'embrayage 90 du groupe motopropulseur 10 de l'invention peut accoupler la sortie d'embrayage 100 à l'entrée d'embrayage 91 même si un des deux arbres (entrée 91 ou sortie 100 d'embrayage) n'est pas flottant. Des exemples d'embrayage 90 qui peuvent être utilisés pour le groupe motopropulseur 10 de l'invention sont : embrayage de type roue libre, embrayage de type mono-disque ou multi-disque (à friction), embrayage électromagnétique. Par contre, l'embrayage 90 utilisé pour le groupe motopropulseur 10 de l'invention ne peut pas être du type embrayage à contacts positifs, à crabot ou à synchro. L'entrée d'embrayage 91 est connectée en permanence à l'arbre intermédiaire 95. Préférentiellement, l'entrée d'embrayage 91 et la sortie d'embrayage 100 sont coaxiaux. Dans un mode de réalisation préféré, l'arbre intermédiaire 95 et l'entrée d'embrayage 91 coïncident.

Les embrayages de type roue libre sont connus de l'homme du métier. Dans une version préférée de l'invention utilisant un embrayage 90 de type roue libre, le moteur thermique 30 ne participe pas à l'entrainement de l'arbre de sortie principal 105 tant que la vitesse de rotation de l'entrée d'embrayage 91 est inférieure à la vitesse de rotation de la sortie d'embrayage 100 et il participe à l'entrainement de l'arbre de sortie principal 105 dès que la vitesse de rotation de l'entrée d'embrayage 91 est égale à la vitesse de rotation de la sortie d'embrayage 100. L'entrée d'embrayage 91 est l'arbre entraînant de l'embrayage de type roue libre tandis que la sortie d'embrayage 100 est l'arbre entraîné de l'embrayage de type roue libre. Les embrayages de type roue libre sont couramment utilisés sur des vélos. En comparant le fonctionnement du groupe motopropulseur 10 de l'invention avec un vélo, le moteur thermique 30 représente le pédalier du vélo quand l'embrayage 90 est un embrayage de type roue libre. L'entraînement du véhicule par le moteur thermique 30 se fait sans à-coups quand l'embrayage 90 est de type roue libre.

Le groupe motopropulseur 10 de l'invention comprend en outre au moins une machine électrique 50 qui est apte à propulser le véhicule et préférentiellement également apte à fournir de l'énergie électrique. Cette machine électrique 50 qui comprend un stator 60 et un rotor 65 est en prise de force sur l'arbre de sortie principal 105 permettant ainsi de transmettre un couple de rotation vers cet arbre de sortie principal 105. La machine électrique 50 est électriquement connectée à un dispositif de stockage d'énergie électrique (non représenté à la figure 1), par exemple une batterie ou des condensateurs. De manière préférée, la machine électrique 50 est une machine à courant alternatif et la connexion électrique entre la machine électrique 50 et la batterie 130 se fait via des convertisseurs de puissance de type onduleurs/redresseurs. Comme illustré à la figure 1, la machine électrique 50 se trouve en aval de l'embrayage 90 : la machine électrique 50 est en effet mécaniquement connectée entre la sortie d'embrayage 90 et l'arbre de sortie principal 105.

Dans le mode de réalisation illustré à la figure 1, le groupe motopropulseur 10 comprend un différentiel 115 qui est monté en série entre la sortie d'embrayage 100 et l'arbre de sortie principal 105. Le groupe motopropulseur 10 illustré à la figure 1 comprend en fait deux arbres de sorties principaux 105 pour entraîner deux roues 110 et le différentiel 105 est monté entre la sortie d'embrayage 100 et les deux arbres de sorties principaux 105. Dans ce mode de réalisation, l'au moins une machine électrique 50 est mécaniquement connectée entre la sortie d'embrayage 100 et le différentiel 115. De préférence, l'au moins une machine électrique 50 comprend un stator 60 et un rotor 65 et ce rotor 65 est directement connecté à la sortie d'embrayage 100.

Une unité de contrôle électronique (non représentée à la figure 1) reçoit par exemple des informations du moteur thermique 30, de l'au moins une machine électrique 50, de la batterie et du poste de pilotage pour commander chacune des machines motrices (30, 50) et éventuellement l'embrayage 90.

Dans un premier mode de fonctionnement appelé électrique pur, l'unité de contrôle électronique ouvre l'embrayage 90 dans le cas où l'embrayage 90 est commandé. La machine électrique 50 est alors la seule à pouvoir entraîner le véhicule à partir de l'énergie électrique stockée dans la batterie. Inversement, lors du freinage du véhicule 20, la machine électrique 50 peut convertir l'énergie cinétique du véhicule en énergie électrique qui est transférée vers la batterie. Ce mode de fonctionnement convient particulièrement bien aux passages dans les centres urbains où les émissions de gaz d'échappement sont mal venues. Dans un tel mode électrique pur, l'embrayage 90 est ouvert et la première boîte de vitesse 70 n'est donc pas accouplée à la machine électrique 50. Ceci permet d'éviter les pertes par barbotage des engrenages de cette première boîte de vitesse 70 et donc d'augmenter l'efficacité énergétique du groupe motopropulseur 10 de l'invention. Le démarrage du véhicule est de manière préférée effectué à l'aide de la machine électrique 50.

Dans un deuxième mode de fonctionnement, appelé hybride parallèle, l'unité de contrôle électronique ferme l'embrayage 90 dans le cas où l'embrayage 90 est commandé. Le moteur thermique 30 entraîne ou contribue alors à entrainer le véhicule via la première boîte de vitesse 70. Lors de sollicitations modérées, seul le moteur thermique 30 entraine le véhicule et la machine électrique 50 fonctionne en génératrice, ce qui permet de recharger le système de stockage d'énergie électrique. Lors de plus fortes sollicitations, la machine électrique 50 et le moteur thermique 30 génèrent de la force motrice et participent à l'entrainement du véhicule. Ce mode hybride parallèle offre un excellent rendement d'ensemble lors des vitesses moyennes plus élevées du véhicule, par exemple en zone périurbaine.

Le système de stockage d'énergie électrique se recharge donc de trois manières possibles : lors du freinage du véhicule via la machine électrique 50 qui agit alors en génératrice ; lors de sollicitations modérées en mode hybride parallèle, via la machine électrique 50 qui est alors entraînée par le moteur thermique 30 ; sur le réseau électrique, de manière préférée via un redresseur.

De manière préférée, la première boîte de vitesse 70 est une boîte de vitesse manuelle. De manière encore plus préférée, la première boîte de vitesse 70 est une boîte de vitesse robotisée.

De manière préférée, la première boîte de vitesse 70 est telle qu'au moins la moitié de ses rapports de réduction possède une valeur inférieure ou égale à un. Comme cela a déjà été mentionné, le rapport de réduction de la première boîte de vitesse 70 est défini comme le rapport entre la vitesse de rotation du premier arbre d'entrée de boîte 75 et la vitesse de rotation du premier arbre de sortie de boîte 80. Si la première boîte de vitesse 70 est telle qu'au moins la moitié de ses rapports de réduction possède une valeur inférieure ou égale à un, cela revient à dire que pour au moins la moitié des rapports de réduction de la première boîte de vitesse 70, la vitesse de rotation du premier arbre de sortie de boîte 80 est supérieure à la vitesse de rotation du premier arbre d'entrée de boîte 75. Ainsi, par rapport à des configurations classiques connues de l'homme du métier, la première boîte de vitesse 70 est inversée. En effet, dans une configuration classique, une boîte de vitesse connectée à un moteur thermique est telle qu'au moins la moitié de ses rapports de réduction possède une valeur supérieure à un. Dans un premier exemple du groupe motopropulseur 10 de l'invention et pour une première boîte de vitesse 70 ayant cinq rapports de réduction, trois d'entre eux ont une valeur inférieure à un et deux d'entre eux ont une valeur supérieure à un. Dans un autre exemple de l'invention et pour une première boîte de vitesse 70 ayant six rapports de réduction, trois d'entre eux ont une valeur inférieure à un et trois d'entre eux ont une valeur supérieure à un. A titre d'exemple, les six rapports de réduction pour la première boîte de vitesse 70 peuvent valoir respectivement : [ 3,3 ; 2,2 ; 1,4 ; 1 ; 0,94 ; 0,78 ]. La disparition des rapports de vitesse courts suite à l'inversion de la première boîte de vitesse 70 dans ce mode de réalisation est compensée par l'effort délivré en parallèle par le moteur électrique 50. De manière encore plus préférée, au moins trois quarts des rapports de réduction de la première boîte de vitesse 70 possèdent une valeur inférieure ou égale à un.

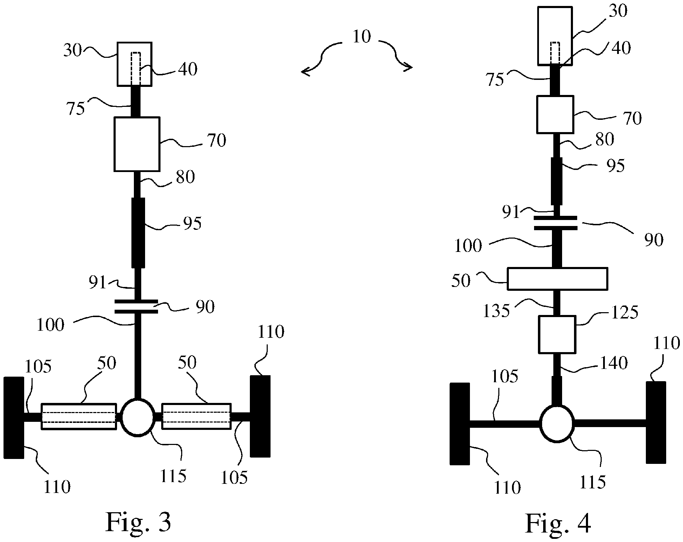

La figure 3 montre un mode de réalisation préféré du groupe motopropulseur 10 de l'invention. Dans ce mode de réalisation, le groupe motopropulseur 10 comprend deux machines électriques 50 qui sont chacune mécaniquement connectées entre un différentiel 115 et un arbre de sortie principal 105. Le rotor de chaque machine électrique 50 est apte à entraîner une roue 110 via cet arbre de sortie principal 105. Les possibilités d'effort différencié sur les deux machines électriques 50 apportent de nouvelles fonctionnalités : anti-patinage en propulsion et antiblocage en freinage par exemple.

La figure 4 montre un autre mode de réalisation préféré de l'invention. Dans ce mode de réalisation, le groupe motopropulseur 10 comprend en outre une deuxième boîte de vitesse 125 qui comprend un deuxième arbre d'entrée de boîte 135 et un deuxième arbre de sortie de boîte 140. Cette deuxième boîte de vitesse 125 comprend une pluralité de rapports de réduction entre le deuxième arbre d'entrée de boîte 135 et le deuxième arbre de sortie de boîte 140. Le rapport de réduction de la deuxième boîte de vitesse 125 est défini comme le rapport entre la vitesse de rotation du deuxième arbre d'entrée de boîte 135 et la vitesse de rotation du deuxième arbre de sortie de boîte 140. Dans le mode de réalisation illustré à la figure 4, la deuxième boîte de vitesse 125 est mécaniquement connectée en série entre la sortie d'embrayage 100 et le différentiel 115, et l'au moins une machine électrique 50 est mécaniquement connectée entre la sortie d'embrayage 100 et la deuxième boîte de vitesse 125. De manière préférée, la deuxième boîte de vitesse 125 comprend deux rapports de réduction. De manière encore plus préférée, au moins la moitié des rapports de réduction de la deuxième boîte de vitesse 125 possède une valeur supérieure ou égale à un. Si la deuxième boîte de boîte de vitesse 125 est telle qu'au moins la moitié de ses rapports de réduction possède une valeur supérieure ou égale à un, cela revient à dire que pour au moins la moitié des rapports de réduction de la deuxième boîte de vitesse 125, la vitesse de rotation du deuxième arbre de sortie de boîte 140 est inférieure à la vitesse de rotation du deuxième arbre d'entrée de boîte 135. Les rapports de réduction de la deuxième boîte de vitesse 125 peuvent être élevés pour offrir un couple important dans les fortes montées et faibles pour atteindre de hautes vitesses.

L'invention décrite ci-dessus s'adresse préférentiellement à des groupes motopropulseurs 10 destinés à être implantés longitudinalement dans un véhicule, comme illustré dans les figures.

Selon un autre aspect, l'invention concerne un véhicule comprenant un groupe motopropulseur 10 tel que décrit précédemment.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Groupe motopropulseur 10 pour véhicule hybride. Le groupe motopropulseur 10 comprend en séquence et dans l'ordre suivant : un moteur thermique 30, une première boîte de vitesse 70, un arbre intermédiaire 95, un embrayage 90, une machine électrique 50 apte à propulser le véhicule et un arbre de sortie principal 105 apte à entraîner en rotation au moins une roue 110 d'un véhicule. La première boîte de vitesse 70 est une boîte de vitesse étagée présentant une pluralité des rapports de réduction et l'arbre moteur 40 du moteur thermique 30 est directement connecté au premier arbre d'entrée de boîte 75 qui comprend une pluralité de pignons aptes à contribuer à la formation de la pluralité des rapports de réduction de la première boîte de vitesse. Préférentiellement, le groupe motopropulseur 10 comprend une deuxième boîte de vitesse 125 telle que la machine électrique 50 est en prise de force sur l'arbre de sortie principal 105 par l'intermédiaire de cette deuxième boîte de vitesse 125.

## Revendications

1. Groupe motopropulseur (10) pour propulser un véhicule et comprenant :
- un moteur thermique (30) apte à propulser le véhicule et comprenant un arbre moteur (40),
- un arbre de sortie principal (105) pour entraîner en rotation au moins une roue (110) du véhicule,
- un arbre intermédiaire (95) mécaniquement connecté en série entre l'arbre moteur (40) et l'arbre de sortie principal (105),
- une première boîte de vitesse (70) comprenant un premier arbre d'entrée de boîte (75) et un premier arbre de sortie de boîte (80), présentant une pluralité de rapports de réduction entre le premier arbre d'entrée de boîte (75) et le premier arbre de sortie de boîte (80) et mécaniquement connectée en série entre l'arbre moteur (40) et l'arbre intermédiaire (95),
- un embrayage (90) comprenant une entrée d'embrayage (91) et une sortie d'embrayage (100), mécaniquement connecté en série entre l'arbre intermédiaire (95) et l'arbre de sortie principal (105) pour accoupler/désaccoupler l'arbre moteur (40) et l'arbre intermédiaire (95) de l'arbre de sortie principal (105), ladite entrée d'embrayage (91) étant connectée en permanence à l'arbre intermédiaire (95),
- au moins une machine électrique (50) apte à propulser le véhicule et mécaniquement connectée entre la sortie d'embrayage (100) et l'arbre de sortie principal (105),
**caractérisé en ce que**
- la première boîte de vitesse (70) est une boîte de vitesse étagée, **en ce que**
- l'arbre moteur (40) du moteur thermique (30) est directement connecté au premier arbre d'entrée de boîte (75) de la première boîte de vitesse (70), et **en ce que**
- ledit premier arbre d'entrée de boîte (75) comprend une pluralité de pignons (76) aptes à contribuer à la formation de ladite pluralité de rapports de réduction.

2. Groupe motopropulseur (10) selon la revendication 1 **caractérisé en ce que** l'embrayage (90) est un embrayage de type roue libre.

3. Groupe motopropulseur (10) selon l'une quelconque des revendications précédentes **caractérisé en ce que** au moins la moitié des rapports de réduction de la première boîte de vitesse (70) possède une valeur inférieure ou égale à un.

4. Groupe motopropulseur (10) selon l'une quelconque des revendications précédentes **caractérisé en ce qu'**il comprend en outre un différentiel (115) mécaniquement connecté en série entre la sortie d'embrayage (100) et l'arbre de sortie principal (105) et **en ce que** l'au moins une machine électrique (50) est mécaniquement connectée entre la sortie d'embrayage (100) et le différentiel (115).

5. Groupe motopropulseur (10) selon la revendication 4 **caractérisé en ce que** l'au moins une machine électrique (50) comporte un stator (60) et un rotor (65) et **en ce que** le rotor (65) est directement connecté à la sortie d'embrayage (100).

6. Groupe motopropulseur (10) selon l'une quelconque des revendications 1 à 3 **caractérisé en ce qu'**il comprend en outre un différentiel (115) mécaniquement connecté en série entre la sortie d'embrayage (100) et l'arbre de sortie principal (105) et **en ce que** l'au moins une machine électrique (50) est mécaniquement connectée entre le différentiel (115) et l'arbre de sortie principal (105).

7. Groupe motopropulseur (10) selon la revendication 4 ou 5 **caractérisé en ce que** :
- le groupe motopropulseur (10) comprend une deuxième boîte de vitesse (125) comprenant un deuxième arbre d'entrée de boîte (135) et un deuxième arbre de sortie de boîte (140) et présentant une pluralité de rapports de réduction entre le deuxième arbre d'entrée de boîte (135) et le deuxième arbre de sortie boîte (140), **en ce que**
- ladite deuxième boîte de vitesse (125) est mécaniquement connectée en série entre la sortie d'embrayage (100) et le différentiel (115), et **en ce que**
- l'au moins une machine électrique (50) est mécaniquement connectée entre la sortie d'embrayage (100) et ladite deuxième boîte de vitesse (125).

8. Groupe motopropulseur (10) selon la revendication 7 **caractérisé en ce que** au moins la moitié des rapports de réduction de la deuxième boîte de vitesse (125) possède une valeur supérieure ou égale à un.

9. Véhicule comprenant un groupe motopropulseur (10) selon l'une quelconque des revendications précédentes.
